Europäisches Patentamt

European Patent Office

Office européen des brevets

(11) Veröffentlichungsnummer: **0 390 131**
**A2**

## EUROPÄISCHE PATENTANMELDUNG

(21) Anmeldenummer: 90105997.2

(22) Anmeldetag: **29.03.90**

(51) Int. Cl.⁵: **C02F 11/10, C10B 53/00, F23G 7/04**

(30) Priorität: **29.03.89 DE 3910092**

(43) Veröffentlichungstag der Anmeldung:
**03.10.90 Patentblatt 90/40**

(84) Benannte Vertragsstaaten:
**AT BE DE FR GB IT NL**

(71) Anmelder: **Still Otto GmbH**
**Christstrasse 9 Postfach 10 18 50**
**D-4630 Bochum 1(DE)**

(72) Erfinder: **Hartmann, Helmut, Dr.**
**Im Rosengarten 1**
**DE-6521 Bechtheim(DE)**
Erfinder: **Nehring, Christoph**
**Peenestrasse 12**
**DE-4300 Essen 1(DE)**
Erfinder: **Stalherm, Dieter, Dr.**
**Doriderweg 14**
**DE-4350 Recklinghausen(DE)**
Erfinder: **Dungs, Horst**
**Am Duengelbruch 21**
**DE-4690 Herne(DE)**
Erfinder: **Winck, Hartmut**
**Altenbochumer Strasse 11**
**DE-4630 Bochum(DE)**

(74) Vertreter: **Dahlkamp, Heinrich-Leo, Dipl.-Ing.**
**c/o Still Otto GmbH Patentabteilung**
**Christstrasse 9 Postfach 10 18 50**
**D-4630 Bochum 1(DE)**

(54) **Verfahren zur Konversion von Substraten, wie z. B. Klär- und/oder Industrieschlämmen, Hausmüll und ähnlichen Abfällen mit organischen Anteilen.**

(57) Die Erfindung bezieht sich auf ein Verfahren zur Konversion von Substraten, wie z. B. Klär- und/oder Industrieschlämmen, Hausmüll und ähnlichen Abfällen mit organischen Anteilen, wobei außer koksähnlichen festen Brennstoffen und Konversionsgasen auch ein Öl/Wasser-Gemisch gewonnen wird.

Erfindungsgemäß wird das mit Schadstoffen belastete Öl/Wasser-Gemisch, gegebenenfalls nach einer Fettsäureabscheidung, zur Zerstörung der Schadstoffe vollständig einer thermischen Nachverbrennung bei mindestens 850 °C, bei Vorhandensein von polychlorierten Kohlenwasserstoffen (z. B. Dioxine oder Furane) mindestens 1.200 °C, unterzogen und die Abgase aus der Nachverbrennung werden, gegebenenfalls nach einer vorherigen Kühlung mit Wärmerückgewinnung, nach einer Endreinigung mit Entschwefelung und/oder Entstickung in die Atmosphäre geleitet.

EP 0 390 131 A2

Die Erfindung bezieht sich auf ein Verfahren gemäß Oberbegriff des Hauptanspruches.

Die bei der Konversion von den angegebenen Substraten gewonnenen nichtmineralischen Konversionsöle sollen z. B. nach der·DE 37 18 133 A1 außerhalb der Anlage verwendet werden oder auch in Diesel-Generator-Aggregaten direkt zur Stromerzeugung eingesetzt werden. Der Einsatz dieser Öle als Ersatzbrennstoff für Diesel oder Heizöl EL/L auf dem freien Markt ist insofern problematisch, als diese Öle folgende chemisch-physikalischen Belastungen aufweisen können:

a) Der Chlorgehalt in den Konversionsölen kann bis um ca. das 10fache höher als in Diesel oder Heizöl EL/L liegen.

b) Der Schwefelgehalt als vornehmlich organische Schwefelverbindungen kann ca. um das 3- bis 6fache höher als bei Diesel bzw. Heizöl EL/L liegen.

c) Das Konversionsöl kann bis zu ca. 1 Gew.% mit feinsten Feststoffteilchen als Schwebeteilchen belastet sein.

Der Einsatz in vorhandenen Verbrennungsanlagen oder Verbrennungsmotoren ist also ohne kostspielige Zusatzinvestitionen nur in den seltensten Fällen möglich.

Der Erfindung liegt die Aufgabe zugrunde, ein Verfahren der eingangs beschriebenen Art vorzuschlagen, bei dem das mit Schadstoffen belastete Öl/Wasser-Gemisch sinnvoll, insbesondere innerhalb des Konversionsprozesses, genutzt wird und es zu keiner Belastung der Umwelt kommt.

Die Lösung dieser Aufgabe ist im Kennzeichen des Anspruches 1 wiedergegeben. Die Unteransprüche 2 bis 5 enthalten sinnvolle ergänzende Maßnahmen hierzu.

Erfindungsgemäß wird das nach der Konversion anfallende, mit Schadstoffen belastete Öl/Wasser-Gemisch, gegebenenfalls nach einer Fettsäureabscheidung, zur Zerstörung der Schadstoffe vollständig einer Nachverbrennung bei mindestens 850 °C, bei Vorhandensein von polychlorierten Kohlenwasserstoffen (z. B. Dioxine oder Furane) mindestens 1.200 °C, unterzogen, um zu gewährleisten, daß eventuell noch vorhandene Schadstoffe vollständig wieder zerstört werden. Das Öl/Wasser-Gemisch kann nach Anspruch 2 als Zusatzbrennstoff zur thermischen Nachverbrennung der Konversionsgase und/oder, gegebenenfalls nach einer Wasserabscheidung, als Treibstoff für speziell ausgerüstete Verbrennungsmotoren bei der Eigenstromerzeugung für die Konversion bzw. Vortrocknung der Einsatzprodukte genutzt werden.

In beiden Nutzungsfällen unterliegen die Öle Verbrennungstemperaturen von ≥ 1.200 °C, so daß die Dioxinzerstörung gewährleistet ist. Die Abgasführung aus den Verbrennungsmotoren nach Anspruch 5 erlaubt im Bedarfsfall eine thermische Nachverbrennung derselben bei ebenfalls 1.200 °C. Die Zonen, die einer Hochtemperatur-Korrosion ausgesetzt werden, sind auf die Verbrennungszonen begrenzt.

Nach Passieren der Verbrennungszonen wird das hochkorrosive Abgas sofort ausreichend gekühlt. Diese Vorkühlung erfolgt nach Anspruch 3 entweder durch Mischen mit prozeßeigenen kalten Abgasen oder durch Quenchen mit Wasser auf ein Temperaturniveau, bei dem eine Hochtemperaturkorrosion ausgeschlossen werden kann. Als Quenchwasser können hier prozeßeigene Überschußwässer, z. B. Kondensate aus Trocknungsprozessen, eingesetzt werden, wodurch eine Abwasserfreiheit des Gesamtprozesses erzielt werden kann. Nach Anspruch 4 kann sich eine indirekte Nachkühlung anschließen, deren Abwärme in Wärme-Kraft-Koppelung für die Erhitzung von Wärmeträgermedien genutzt wird, die in der Konversion benötigt werden.

Die Wärmeenergie der Öle wird so maximal ausgenutzt, wobei das Verfahren eine Anpassung an die Schadstoffqualitäten in den Ölen erlaubt. Alle für diese Nutzung notwendigen Apparate/Maschinen sind in der Konversionsanlage vorhanden. Lediglich ihre Auslegung muß angepaßt werden und einige zusätzliche Rohrleitungen sind zu installieren.

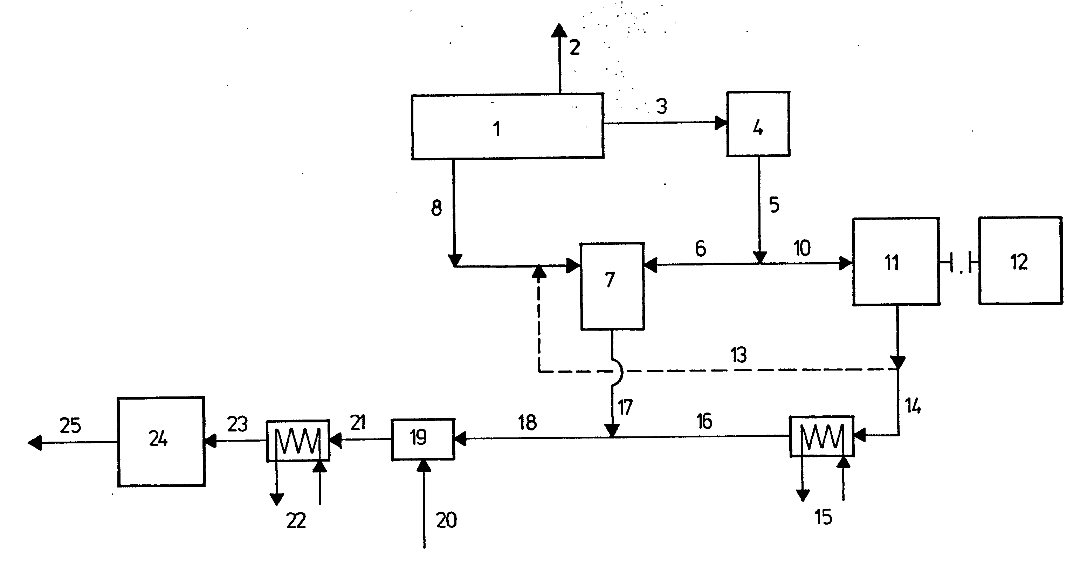

Die Erfindung wird anhand der beigefügten Zeichnung beispielsweise näher dargestellt.

Aus der Konversionsanlage (1) treten drei Stoffströme aus: Konversionskoks (2), nicht kondensierbare, schadstoffbelastete Gase (8) und schadstoffbelastetes, unter Umständen von Fettsäuren extrahiertes Öl/Wasser-Gemisch (3), das in einem Tank (4) temperiert gelagert wird. Der Stoffstrom Gase (8) wird anlagen- intern unter Zugabe von Brennstoff in einer thermischen Nachverbrennung (7) bei 850 bis 1.250 °C gereinigt und entsorgt. Erfindungsgemäß wird hier ein Teilstrom des gelagerten Öl/Wasser-Gemisches (5/6) als Brennstoff genutzt.

Die Zugabe von Fremdbrennstoff ist nicht notwendig. Eventuelle Dioxingehalte/-bildungen werden durch die Verbrennungstemperatur von mindestens 1.200 °C in der thermischen Nachverbrennung zerstört bzw. unterbunden. Der restliche Teilstrom des Öl/Was ser-Gemisches (5/10) wird, gegebenenfalls nach einer Wasserabscheidung, den Verbrennungsmotoren (11) der Eigenstromerzeugung (12) zugeleitet. Diese Verbrennungsmotoren laufen allgemein mit Brennkammertemperaturen von ca. 1.600 °C, wodurch Dioxingehalte/-bildungen ebenfalls zerstört bzw. unterbunden werden. Die Konstruktion der Motoren (Langsamläufer, Vorkammerbrennung) erlaubt auch die Aufgabe des schadstoffbelasteten Öl/Wasser-Gemisches. Sinkt die Stromabnahme am nachgeschalteten Generator (12), nimmt die Drehzahl des Verbrennungsmotors äquivalent ab. Die Verbrennungstemperaturen im Motor sinken ebenfalls geringfügig. Um eine Verbrennungstemperatur des Öls von ≥ 1.200 °C sicherzustellen und so die Dioxinfreiheit zu gewährleisten, kann das Abgas (13) über die thermische Nachverbrennung (7) geleitet werden, wo es einer Temperatur von 1.200 °C ausgesetzt wird. Das Abgas (13/14) aus den Verbrennungsmotoren verläßt diese mit Temperaturen von 450 bis 550 °C. Wird es nicht mehr der thermischen Nachverbrennung (7) zugeführt, wird seine Wärme durch indirekte Abkühlung in einem Wärmetauscher (15) z. B. zur Thermalölerhitzung genutzt. Der abgekühlte Abgasstrom (16) verläßt dann den Wärmetauscher (15) und dient auf einer Mischstrecke (18) zur Kühlung des 1.200 °C heißen Abgases (17) aus der thermischen Nachverbrennung (7). Für den Fall, daß das Motorabgas (13) der thermischen Nachverbrennung (7) zugeführt wird oder die Abkühlung durch die Gasmischung Motorabgas/Nachverbrennungsabgas nicht ausreicht, ist ein Wasserquench (19) nachgeschaltet, der temperaturgesteuert Wasser (20) in den Abgasstrom düst und dieses so auf eine gewünschte Temperatur von z. B. unter 750 °C abkühlt.

Durch die gezielte Abkühlung des Abgases können Hochtemperaturkorrosionen in jedem Fall vermieden werden. Der Gasstrom (21) wird in einem weiteren Wärmetauscher (22) indirekt auf die Anströmtemperatur der Entschwefelungsanlage (24) abgekühlt. Die Abwärme kann ebenfalls z. B. für die Aufheizung von Thermalöl genutzt werden. Der Abgasstrom (23) wird der Abgasreinigungsanlage (24) zur Reduzierung der emissionsrelevanten Schadstoffanteile, z. B. $SO_2$, HCl und Staub, zugeleitet und gelangt im gereinigten Zustand (25) in die Atmosphäre.

## Ansprüche

1. Verfahren zur Konversion von Substraten, wie z. B. Klär-und/oder Industrieschlämmen, Hausmüll und ähnlichen Abfällen mit organischen Anteilen, wobei außer koksähnlichen festen Brennstoffen und Konversionsgasen auch ein Öl/Wasser-Gemisch gewonnen wird, **dadurch gekennzeichnet,** daß das mit Schadstoffen belastete Öl/Wasser-Gemisch, gegebenenfalls nach einer Fettsäureabscheidung, zur Zerstörung der Schadstoffe vollständig einer thermischen Nachverbrennung bei mindestens 850 °C, bei Vorhandensein von polychlorierten Kohlenwasserstoffen (z. B. Dioxine oder Furane) mindestens 1.200 °C, unterzogen wird und die Abgase aus der Nachverbrennung, gegebenenfalls nach einer vorherigen Kühlung mit Wärmerückgewinnung, nach einer Endreinigung mit Entschwefelung und/oder Entstickung in die Atmosphäre geleitet werden.

2. Verfahren nach Anspruch 1, **dadurch gekennzeichnet,** daß das Öl/Wasser-Gemisch als Zusatzbrennstoff zu einer thermischen Nachverbrennung anderer Prozeßprodukte, insbesondere der Konversionsgase, und/oder, gegebenenfalls nach einer Wasserabscheidung, als Treibstoff für Verbrennungsmotoren, insbesondere zur Eigenstromversorgung, genutzt wird.

3. Verfahren nach Anspruch 1 oder 2, **dadurch gekennzeichnet,** daß die Abgase aus der Nachverbrennung durch Mischung mit prozeßeigenen Abgasen oder durch Zugabe von Wasser, insbesondere prozeßeigenem Überschußwasser aus der Vortrocknung der Substrate, gekühlt werden.

4. Verfahren nach einem oder mehreren der vorhergehenden Ansprüche, **dadurch gekennzeichnet,** daß die Abgase aus der thermischen Nachverbrennung im indirekten Wärmeaustausch zur Erwärmung von prozeßeigenen Medien und/oder Thermalöl dienen.

5. Verfahren nach einem oder mehreren der vorhergehenden Ansprüche, **dadurch gekennzeichnet,** daß die Abgase aus den Verbrennungsmotoren im Bedarfsfall in die thermische Nachverbrennung der anderen Prozeßprodukte gegeben werden.